# EUROPEAN PATENT APPLICATION

(11) **EP 1 467 542 A1**
(43) Date of publication of application: **13.10.2004**
(21) Application number: 03008342.2
(22) Date of filing: 10.04.2003
(51) Int. Cl.: H04M 1/22, H04M 1/247, H04M 1/725, G06F 3/02, G06F 3/033, G06F 1/16

(54) **Portable electronic equipment having a light indicator**

(71) Applicant: Sony Ericsson Mobile Communications AB, 221 88 Lund (SE)
(72) Inventor: Asphult, Per, 226 39 Lund (SE); Nilsson, Daniel, 226 52 Lund (SE)
(74) Representative: Dahnér, Christer

(57) **Abstract**

The present invention is directed towards a portable electronic equipment (10) comprising a light indicator for showing different activities and/or status information, in which equipment (10) a joy stick button (18) is transparent to operate as said light indicator showing at least two colours.

## Description

### TECHNICAL FIELD OF THE INVENTION

The present invention relates to the field of portable electronic equipment and more particularly to the such equipment including a light indicator for showing activity or status information.

### DESCRIPTION OF RELATED ART

It is often desirable to provide portable electronic equipment, such as cellular phones, with a light indicator for showing activity or status information, for instance charging information, such as battery status, i. e. battery level, and network information, for instance a flashing light indicating communication with a network.

Today, the light indicator is typically made by providing a hole in the cover, such as the front panel of the phone, into which the light indicator is located. The light is typically provided by means of a light emitting diode, called a LED and has different colours, for instance red and green for showing activity and information by means of a light guide. For instance, a red light indicates that battery power is below a critical level.

A disadvantage of known portable electronic equipment is however that they require extra holes in the cover. Often this is not desirable for the design, space is occupied and because of mechanical reasons it may also be problems or increasing costs during manufacturing to provide holes.

Thus, there is a need for a portable electronic equipment which do not require extra holes in a cover thereof for receiving light indicators for showing activity and/or status information.

### SUMMARY OF THE INVENTION

The present invention is therefore directed towards solving the problem of mounting a light indicator for showing activity and/or status information, which mounting do not require extra holes in covers.

One object of the present invention is thus directed towards providing a portable electronic equipment with a light indicator for showing activity and/or status information mounted such that no extra hole in a panel, such as the front panel, of the equipment has to be made.

According to a first aspect of the present invention, these objects are achieved by a portable electronic equipment comprising:
buttons for operation thereof, and a light emitting element, wherein a joy stick button is at least semi-transparent, and said light emitting element is located such that said joy stick button is adapted to operate as a light indicator for showing at least two colours for different activities and/or status information when illuminated by means of said light emitting element.

A second aspect of the present invention includes the features of the first aspect, wherein said information includes charging, battery, network and cordless activity information, such as Bluetooth® information.

A third aspect of the present invention includes the features of the first aspect or the second aspect, wherein a first waveguide element is located between said light emitting element and said joy stick button.

A fourth aspect of the present invention includes the features of the third aspect, wherein said joy stick button is adapted to receive a keypad joystick adapted to operate buttons of the electronic equipment, said joystick comprising a second waveguide element.

A fifth aspect of the present invention includes the features of any one of the previous aspects, wherein said joy stick button is essentially transparent.

A sixth aspect of the present invention includes the features of any one of the previous aspects, wherein said joy stick button is semi-transparent.

A seventh aspect of the present invention includes the features of any one of the previous aspects, wherein said light emitting element is a light emitting diode (LED).

An eight aspect of the present invention includes the features of the any one of the previous aspects, wherein the colours that the light emitting element emits are red and green.

A ninth aspect of the present invention includes the aspect of the any one of the previous aspects, wherein the colours the light emitting element emits are red, green and blue.

A tenth aspect of the present invention includes the aspect of any one of the previous aspects, wherein said equipment is adapted to operate also as a gaming machine.

An eleventh aspect of the present invention includes the aspect of any one of the previous aspects wherein the equipment is a cellular phone, a smart phone or a communicator.

The present invention has many advantages, one being that the design of the electronic equipment is less restricted since no extra hole(s) in cover (panels) thereof is/are required. The use of a joy stick button, being transparent or semi-transparent provides a dual function of this button, as light indicator besides its normal function. Another advantage of the present invention is that mechanical problems during manufacturing could be reduced. Therefore this portable electronic equipment can be manufactured easier, typically less expensive, which is desirable.

Yet another advantage with the present invention, according to an embodiment thereof, is that the portable electronic equipment can also operate as a gaming machine having the possibility of special visual effects such as multi-colour indication, typically with flashing light effects as well.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 is a schematic view illustrating a portable electronic equipment according to an embodiment of the present invention, which includes a joy stick,
Fig. 2 is a cross section of the joystick on the line A-A of Fig. 1.

### DETAILED DESCRIPTION OF EMBODIMENTS

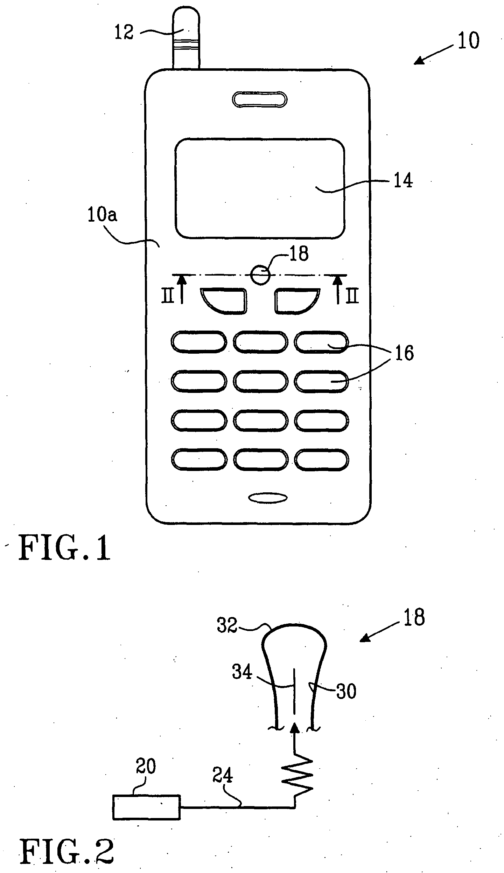

A portable electronic equipment 10 according to an embodiment of the invention is shown in Fig. 1. In a preferred embodiment, the equipment 10 is a cellular phone having an antenna 12, a display 14 and operating buttons 16, of which operating buttons 16, one button, herein a joy stick button 18, is a transparent button. It should be realised that more than one button being transparent, or semi-transparent can be implemented even if not shown in Fig. 1.

The cellular phone 10 further comprises a light emitting element 20, herein a light emitting diode (LED) located remote from the transparent joy stick button 18. The light emitting element 20 can for instance be located in the cellular phone 10 in a side part 10a thereof sufficiently remote from the display 14, and preferably also remote from the antenna 22 because these areas normally suffer from small space because of circuitry required for driving display 14 and circuitry for the antenna 22. The light emitting element 20 is further connected to a first wave guide element 24 located between the light emitting element 20 and the transparent joy stick button 18. It is also possible according to an alternate embodiment of the invention that the light emitting element 20 is located directly under the joy stick button 18, provided there is space enough, even if this it not illustrated.

The invention will now be further described by way of an example of operation thereof.

When the light emitting element 20 emits light (optical energy) to the first wave guide element 24, the first wave guide element 24 transmits this light to the transparent joy stick button 18 from below so that it is illuminated, thereby indicating an activity such as connection to a network, for instance by means of flashing green light, or showing status information such as low battery power by means of red light indicating that charging of battery is required. A green light may then indicate when battery level is high enough for operation again. Thus, the light emitting element 20 emits at least two colours, preferably more. Examples of colours are green, red and blue.

As an example, in case of cordless supplementary equipment such as a head set communicating by means of so-called Bluetooth® technology, blue colour, typically flashing, could be provided indicating such communication.

As an alternative example, in case of the phone 10 operating as a gaming machine, having games that could be played on the phone 10, multiple colours, say three, may be required to satisfy a player. Also flashing functions etc could of course be provided.

For instance, if the cellular phone is used as a gaming machine, the joy stick button 18 could show red colour when failing in a game ("game over") and flashing green colour when scoring points. This is a great advantage with the present invention, since conventional cellular phones typically does not provide this kind of special effects.

Now is referred to Fig. 2 illustrating a cross-section taken along line A-A in Fig. 1. This figure shows the same embodiment as illustrated in Fig. 1.

The transparent button 18 is a joystick having a stem 30 and a transparent handle 32 into which a second waveguide element 34 is embedded (illustrated by dashed lines). The second waveguide element can also be the whole stem 30, and may also include the handle 32 or part thereof. During operation, light will be transmitted via the first wave guide element 24 from the light emitting element 20 into the second wave guide element 34, which is properly adapted in terms of refractive index, surface curvature (for incident light) etc and located in relation to the first wave guide element 24 so that light can be transferred to the handle region 32 (or other suitable region), so that a user (for instance a user playing a game) can easily see the light coming from joy stick 18 being transparent and acting as a light indicator.

In the drawing figures, the transparent button is a joy stick; however, it is obvious for a skilled person that any other suitable button could also be employed in combination with the joy stick button.

Moreover, the button does not need to be transparent, or essentially transparent, but could also be semi-transparent.

The first wave guide element may not be required, instead the light emitting element could be located directly under the transparent button(s) or adjacent the same providing light from a suitable side thereof.

The first wave guide element is typically an optical fibre, but could also include a mirror element or any other suitable guiding element, provided the transmission of light is sufficient.

The term "remote location" includes any suitable location being sufficiently remote to accommodate the light emitting element without negatively influencing the operation of the cellular phone, for instance as regards space requirements in a particular area thereof.

It should be realised that cellular phone is just one type of device in which the invention can be implemented. It can just as well be provided in other types of portable electronic devices such as a lap top computer, a palm top computer, an electronic organizer, a smart-phone, a communicator, a calculator or a gaming machine.

The screen can be any suitable screen including touch screens onto which it is possible to enter information directly onto the screen such as selection of functions or applications and controlling these functions and applications.

There are more ways in which the invention can be varied Therefore the invention is only to be limited by the accompanying claims.

## Claims

1. A portable electronic equipment comprising buttons (16) for operation thereof, and a light emitting element (20), wherein a joy stick button (18) is at least semi-transparent, and said light emitting element (20) is located such that said joy stick button (18) is adapted to operate as a light indicator for showing at least two colours for different activities and/or status information when illuminated by means of said light emitting element (20).

2. The equipment of claim 1, wherein said information includes charging, battery, network and cordless activity information, such as Bluetooth® information.

3. The equipment according to claim 1 or 2, wherein a first waveguide element (24) is located between said light emitting element (20) and said joy stick button (18).

4. The equipment according to claim 3, wherein said joy stick button (18) is adapted to receive a keypad joystick adapted to operate buttons of the electronic equipment, said joystick button (18) comprising a second waveguide element (34).

5. The equipment according to any one of the preceding claims, wherein said joy stick button (18) is essentially transparent.

6. The equipment according to any one of the preceding claims, wherein said joy stick button (18) is semi-transparent.

7. The equipment according to any one of the preceding claims, wherein said light emitting element (20) is a light emitting diode (LED) emitting at least two colours.

8. The equipment according to any one of the preceding claims, wherein said colours are red and green.

9. The equipment according to any one of the preceding claims, wherein said colours are red, green and blue.

10. The equipment according to any one of the previous claims, wherein said equipment (10) is adapted to operate also as a gaming machine.

11. The equipment according to any one of the claims 1-10, wherein the equipment (10) is a cellular phone, a smart phone or a communicator.
